# EUROPÄISCHE PATENTSCHRIFT

(11) **EP 2 245 429 B1**
(45) Veröffentlichungstag und Bekanntmachung des Hinweises auf die Patenterteilung: **31.08.2011**
(21) Anmeldenummer: 09710777.5
(22) Anmeldetag: 13.02.2009
(51) Int. Cl.: G01F 1/28, G01F 15/00, F16K 11/044, F16K 37/00, F16K 1/52

(54) **VERTEILERVENTIL MIT INTEGRIERTER DURCHFLUSSMESSEINRICHTUNG**
DISTRIBUTION VALVE WITH INTEGRATED FLOW METERING UNIT
SOUPAPE DE DISTRIBUTION AVEC DISPOSITIF INTÉGRÉ DE MESURE DE DÉBIT

(30) Priorität: 13.02.2008 DE 102008010347
(43) Veröffentlichungstag der Anmeldung: 03.11.2010
(73) Patentinhaber: STRAUB OHG, 73337 Bad Überkingen (DE)
(72) Erfinder: STRAUB, Hans, 73337 Bad Überkingen (DE); JÄGER, Martin, 73312 Geislingen (DE)
(74) Vertreter: Fürst, Siegfried
(86) Internationale Anmeldenummer: PCT/EP2009/001035
(87) Internationale Veröffentlichungsnummer: WO 2009/100930

(56) Entgegenhaltungen:
- EP-A- 1 734 346
- DE-A1- 10 006 326

## Beschreibung

Die Erfindung betrifft ein Verteilerventil mit einer Durchflussmesseinrichtung insbesondere für Warmwasseranlagen.

Aus dem Stand der Technik sind mit einer Durchflussmesseinrichtung kombinierte Verteilerventile für Warmwasserheizungsanlagen bekannt, zum Einsatz in einer Hauptleitung und/oder mehreren davon abzweigenden Anschlussleitungen bekannt. Im Verteilerventil ist ein verschließbarer Ventilsitz vorgesehen und eine Durchflussmesseinrichtung mit einer Anzeige.

Die Anzeige, die sich längs einer Achse in ein radial in das Leitungsrohr ragendes Anschlussrohr des Verteilerventils erstreckt, besteht aus einem durch die Strömung im Anschlussrohr auslenkbaren Anströmteil, dessen jeweilige Stellung im Anschlussrohr zur Anzeige einer Durchflussmenge des Mediums durch das Anschlussrohr dient, die außen an der Durchflussmesseinrichtung ablesbar ist.

Mit einem Verschlussteil wird durch Drehung an einem Stellelement eine im Anschlussrohr vorgesehene Austrittsöffnung - der Ventilsitz - für die Einstellung der Durchflussmenge des Mediums geöffnet oder geschlossen. Ein derartiges Verteilventil ist z. B. aus der EP 1 734 346 A2 bekannt.

Diese Verteilerventile dienen zum Abgleich der einzelnen Leitungen zueinander, zur Verhinderung von Leistungsverlusten, sowie zum hydraulischen Ausgleich in der Warmwasserheizungsanlage.

Aus der DE 100 06 326 A1 ist ein Handantrieb für Absperrorgane bekannt, bei dem mittels einem Handrad unter Zwischenschaltung einer Spindel ein Ventilelement eines Ventils betätigt wird. Die Bewegung der Spindel ist für eine Schließbegrenzung mit einer ersten einstellbaren Endlage und für eine Hubbegrenzung mit einer zweiten einstellbaren Endlage begrenzbar. Hierzu sind im Handrad axial verstellbare Hülsen mit Anschlägen vorgesehen, die nach deren Einstellung durch eine Abdeckkappe abgedeckt werden, damit keine unbeabsichtigte Verstellung erfolgt. Für eine Neueinstellung der Begrenzung muss zunächst erst die Abdeckkappe entfernt werden.

Nachteilig bei diesen Lösungen ist, dass für eine genaue Regulierung der benötigten Durchflussmenge, je nach Ausführung, mehr oder weniger Fingerspitzengefühl sowie Verantwortungsbewusstsein des Bedieners bei der Einstellung erforderlich sind. Bei dem Handantrieb ist zwar eine Einstellung von Endlagen möglich, diese Einstellung ist jedoch für die vorgesehene Anwendung zu ungenau und die Einstellelemente für die Endlagen, die axial verstellbaren Hülsen können sich bei der Betätigung des Handrades verstellen.

Ausgehend von diesem Stand der Technik besteht die Aufgabe der Erfindung darin, ein gattungsgemäßes Verteilerventil mit einer Durchflussmesseinrichtung derart zu verbessern, dass eine eingestellte Position des Ventilkörpers bezüglich einer Durchflussmenge mehrfach - zeitlich nacheinander - reproduzierbar ist.

Gelöst wird diese Aufgabe durch ein Verteilerventil mit den Merkmalen des Anspruches 1. Die nach geordneten Ansprüche 2 bis 11 offenbaren weitere Ausgestaltungsvarianten der Erfindung.

Kern der Erfindung ist, dass einem Verteilerventil mit Durchflussmesseinrichtung, eine Voreinstelleinrichtung zugeordnet ist, die den Hub des Ventilkörpers zum Öffnen des Verteilerventils begrenzt, wobei

dem Verschlussteil in Form eines Ventilkörpers und/oder dem führenden Befestigungselement als Voreinstelleinrichtung ein Hubbegrenzer zugeordnet ist, der die mit dem Öffnen des Verteilerventiles einhergehende axiale Verschiebung des Ventilkörpers begrenzt, wobei der dem Ventilkörper und/oder dem führenden Befestigungselement des Verteilerventils zugeordnete Hubbegrenzer von einem axial bewegbaren Einstellglied und einem Sicherungselement gebildet ist.

Das Einstellglied ist nach einer Ausführung ein Zwischenteil, welches konzentrisch zur Bewegungsachse des Ventiles zwischen einem Abschnitt des Befestigungselementes und einem Abschnitt des Ventilkörpers angeordnet ist.

Vorzugsweise ist das Zwischenteil ein Zylinderkörper, dessen obere Seite einen Bund aufweist und von dessen unterer Seite aus in axialer Richtung körpereinwärts ein durchgehendes Innengewinde und ein Außengewinde vorgesehen sind, wobei von der oberen Seite aus in Richtung Innengewinde eine Eindrehung vorgesehen ist, in der ein Anschlagteil angeordnet ist.

Eine weitere vorteilhafte Variante einer ersten Ausführung wird auch darin gesehen, dass das Sicherungselement ein Sperrglied ist, wobei das Sperrglied mit seinem zylindrischen Körper konzentrisch um den außenliegenden Abschnitt des Befestigungselementes axial verschieblich angeordnet und das Sperrglied formschlüssig mit dem Zwischenteil jeder seiner möglichen Axialpositionen verbunden ist.

Bevorzugt weist der zylindrische Körper des Sperrgliedes von seiner oberen Stirnfläche aus in Richtung seiner unteren Stirnfläche eine Durchgangsbohrung mit Längsrillen, eine mittlere Bohrung und eine vordere Bohrung auf, wobei der der unteren Stirnfläche nahe Körperbereich als Flansch ausgebildet und von der unteren Stirnfläche aus eine sechskant-förmige Ausnehmung vorgesehen ist.

Nach einer zweiten Ausführungsvariante ist vorgesehen, dass das axialbewegbare Einstellglied für die Hubbegrenzung aus einer Sperrkappe und einer mit letzterer zusammen wirkenden Anschlagshülse besteht und das Sicherungselement von einem Sicherungsring gebildet wird, welcher am Außenmantel der Sperrkappe in einer Umfangsnut lös- und arretierbar angeordnet ist.

Bevorzugt ist vorgesehen, dass die Sperrkappe ein Hülsenteil aufweist, einenends einen Innenbund besitzt und die Innenfläche des Hülsenteils als Innengewinde ausgebildet ist.

Die Anschlaghülse hat einen einenends einen Innenflansch und anderenends einen Außenflansch. Die Innenfläche der Anschlaghülse ist mit Längsrillen ausgestattet. In eingebautem Zustand greift der Außenflansch der Anschlagshülse bei vollständig geöffnetem Ventilkörper an dem Innenbund der Sperrkappe an. Der Innenflansch der Anschlaghülse ist am Endbereich des Ventilkörpers angelenkt. Wird der Ventilkörper zum Öffnen des Verteilerventiles axial nach außen bewegt, so ist der Hub bei Anschlag des Außenflansches am Innenbund der Sperrkappe begrenzt.

Durch den Sicherungsring wird bei vorgenommener Einstellung der Hübbegrenzung die Sperrkappe gegen axiale Bewegung arretiert. Hierzu wird der Sicherungsring gedreht, bis er in wenigstens eine der Längsnuten des Außengewindes des Befestigungselementes einrastet.

Zur Senkung des fertigungstechnischen Aufwandes und zur weiteren Verbesserung der Handhabung des Einstellgliedes für die Hubbegrenzung ist bei einer weiteren Ausgestaltung der voranstehend genannten zweiten Ausführungsvariante weiterhin erfindungsgemäß vorgesehen, dass das Sicherungselement zur Arretierung der gewählten axialen Position der Sperrkappe integral mit der Sperrkappe ist. Der oben genannte Sicherungsring wird hier durch Rastteile ersetzt, die am Außenmantel der Sperrkappe vorgesehen sind. Dabei ist der Außenmantel der Sperrkappe selbst als ein axial verschiebbares Ringteil ausgebildet. Dieses Ringteil ist konzentrisch um das Hülsenteil der Sperrkappe angeordnet. Dabei ist das Ringteil in seiner axialen Länge kürzer als das Hülsenteil. Bevorzugt sind im axial verschiebbaren Ringteil vier federelastische Rastteile vorgesehen, vorzugsweise in einer 90°-Teilung angeordnet. Im Hülsenteil sind eine gleiche Anzahl von Aussparungen vorgesehen. Jeweils ein Rastteil ragt durch eine Aussparung in den Innenraum des Hülsenteils hinein. Durch axiale Verschiebung des am Hülsenteil geführten Ringteiles sind zwei Funktionspositionen einstellbar. In der einen Position ragt jedes Rastteil, wie voranstehend genannt, in den Innenraum des Hülsenteiles hinein - die Arretierposition - , in der anderen Position - Bewegungsposition - ist jedes Rastteil durch Anlage an einem Wandabschnitt der Aussparung radial nach außen gedrückt.

In der Arretierposition greift jedes Rastteil in eine der bereits weiter vorn genannten Längsnuten des Befestigungselementes ein. Zur Sicherung dieser Position wird ein Blockierteil in den zwischen einer Stirnseite des Ringteiles und des Hülsenteiles gebildeten radialen Spaltes angeordnet.

Zur Änderung der eingestellten Position der Hubbegrenzung, also zur Einnahme der Bewegungsposition, wird das Blockierteil entfernt, das Ringteil in axialer Richtung verschoben, sodass die Rastteile aus den Längsnuten des Befestigungselementes herausgeführt werden. Sodann wird die Sperrkappe in axialer Richtung durch Drehung in eine neue Soll-Position gebracht. Dann das Ringteil in entgegengesetzter Richtung axial bewegt, wodurch die federelastischen Rastteile sich wieder nach innen bewegen und letztendlich jeweils in eine Längsnut des Befestigungselementes eingreifen. Eine Drehung der Sperrkappe mit ihrem Innengewinde an den Gewindering des Befestigungselementes ist nunmehr nicht möglich. Das Blockierteil,wird wieder in dem radialen Spalt angeordnet, wodurch eine unbeabsichtigte Öffnung des Sperrmechanismus -nicht erfolgen kann.

Die Funktionsweise einer ersten Ausführungsvariante des neuen Verteilerventils wird folgend dargelegt. Zunächst ist die Arretierung vom Sperrglied zu lösen, durch Hochziehen von selbigem bis der Innen-Sechskant frei ist und das Sperrglied zugleich mit dem oberen Bereich des Ventilkörpers Formschluss erhält. Nun wird durch Drehen des Sperrgliedes der Ventilkörper in axialer Richtung nach außen verschoben, der Ventilsitz geöffnet und der gewünschte Durchfluss eingestellt. Bei dieser Bewegung wird synchron zur Verschiebung des Einstellgliedes in axialer Richtung der Ventilkörper in gleicher Richtung mit bewegt, ohne dass seine Position/Lage bezüglich des oberen Bereiches des Einstellgliedes geändert wird. Anschließend wird das Sperrglied wieder nach unten gedrückt, bis sein Innen-Sechskant auf dem Außen-Sechskant aufgeschoben ist. Nunmehr ist das bezüglich der gewünschten Durchflussmenge axial positionierte Einstellglied gegen Verschiebung gesichert. Hiernach wird durch Betätigung des Ventilkörpers durch Ergreifen eines am oberen Bereich des Ventilkörpers vorgesehenen Griffelementes der Ventilkörper von seiner durch die Vornahme der Voreinstellung geöffneten Stellung in eine geschlossene Stellung bewegt. Bei einem nachfolgenden (Wieder-) öffnen des Verteilerventiles durch Bewegen des Ventilkörper, kann letzterer nur bis zu der vorgegebenen maximalen Position bewegt werden, diese entspricht der gewollten Durchflussmenge.

Durch die vorgenommene Voreinstellung nebst arretierter Stellung des Einstellgliedes wird eine Reproduzierbarkeit der voreingestellten Durchflussmenge garantiert.

Nachfolgend wird noch die Funktionsweise der beschriebenen zweiten Ausführungsvariante des neuen Verteilerventiles dargelegt.

Das Sicherungselement, der Sicherungsring, wird aus seiner Arretierstellung gelöst. Ein Teil des Einstellgliedes, die Sperrkappe, wird hochgeschraubt. Danach wird der Ventilkörper an seinem Handrad verdreht, bis die geforderte Durchflussmenge einreguliert ist.

Sodann wird die Sperrkappe gegen die zum Einstellglied gehörende Anschlaghülse gedreht, so dass Anschlaghülse und Sperrkappe gemeinsam den für eine reproduzierbare Einstellung der Durchflussmenge erforderlichen Maximalhub begrenzen.

Dann wird der im Außenmantel der Sperrkappe gehaltene Sicherungsring wieder eingerastet und das Einstellglied gegen Verdrehen gesichert.

Nun kann nach Bedarf das Verteilerventil geschlossen werden. Durch die arretierte Stellung der Sperrkappe wird beim Öffnen des Verteilerventiles eine Reproduzierbarkeit der voreingestellten Durchflussmenge garantiert.

Die Erfindung wird nachfolgend anhand von schematisch in Zeichnungen dargestellten bevorzugten Ausführungsbeispielen näher und in Details erläutert.

Es zeigen:
- Figur 1: in einem Querschnitt ein erfindungsgemäßes neues Verteilerventil, eingeschraubt in ein Leitungsrohr, in einer Grundstellung "geschlossen";
- Figur 2: das neue Verteilerventil nach Figur 1 in einer ersten Betätigungsphase bezüglich der Festlegung der Voreinstellung;
- Figur 3: das neue Verteilerventil nach Figur 1 in einer zweite Betätigungsphase;
- Figur 4: das neue Verteilerventil nach Figur 1 in einer dritten Betätigungsphase, Abschluss der Voreinstellung, Ventil geöffnet;
- Figur 5: das neue Verteilerventil nach Figur 1 mit eingestellter Voreinstellung, Ventil geschlossen;
- Figur 6a und 6b: Einzelheiten des neuen Verteilerventils nach Figur 1, bei geschlossenem und geöffnetem Ventil;
- Figur 7: in einem Halbschnitt eine zweite Variante eines Verteilerventils mit Einrichtung zur Voreinstellung, Ventil geschlossen;
- Figur 8: das Verteilerventil nach Figur 7, Ventil geöffnet; und
- Figur 9a, 9b, 9c: in teilweiser Schnittdarstellung eine zweite Ausführungsvariante der in Figur 7 und 8 dargestellten Sperrkappe nebst Sicherungselement.

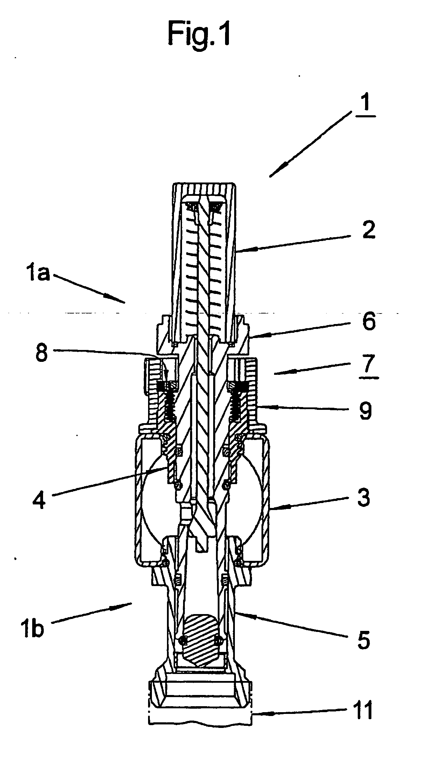

In der Figur 1 ist das neue Verteilerventil 1 mit integrierter Durchflussmesseinrichtung 2 in einer ersten Ausführungsvariante in Querschnittsdarstellung schematisch gezeigt. Das Verteilerventil 1 besteht aus einer oberen Gruppe 1a und einer unteren Gruppe 1b. Die obere Gruppe 1a ist mit einem zum Verteilerventil 1 gehörenden Befestigungselemtent 4 in einer oberen Öffnung 31 im Leitungsrohr 3 festgelegt. Gegenüber liegend ist im Leitungsrohr 3 eine unter Öffnung 32 vorgesehen, wobei durch diese beiden Öffnungen 31, 32 gedanklich gelegte Längsachsen, die der Übersichtlichkeit halber nicht eingezeichnet sind, miteinander fluchten. An der unteren Öffnung 32 sind Bauteile der unteren Gruppe 1 b des Verteilerventils 1 festgelegt und zwar hier in spezieller Ausführung ein Anschlussrohr 5. Der Ventilkörper 6 des Ventils 1 ist in dem Befestigungselement 4 längs verschieblich geführt.

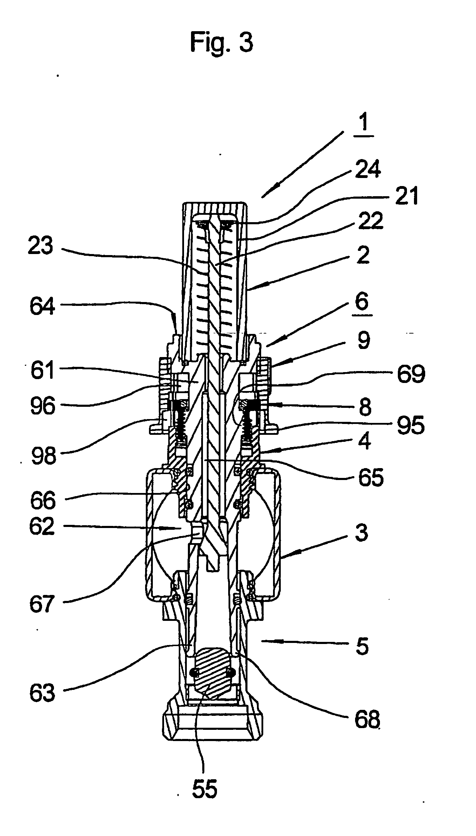

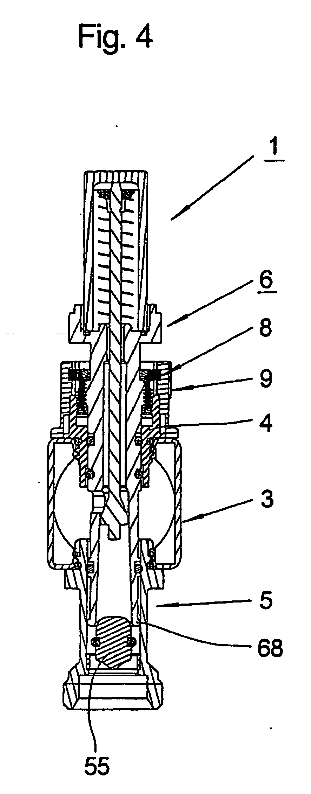

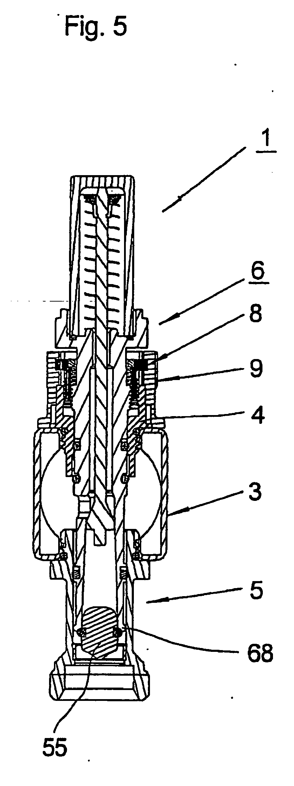

Dem Verteilerventil 1 ist nun in neuer und erfinderischer Ausführung ein Hubbegrenzer 7 zugeordnet. Bevorzugt ist dieser Hubbegrenzer 7 an der oberen Gruppe 1a des Verteilerventiles 1 integriert. In spezieller Ausführung gemäß den Figuren 1 bis 6b ist dieser Hübbegrenzer 7 an einem außenliegenden Abschnitt 41 des Befestigungselementes 4 angeordnet und variabel einstellbar.

Dieser Hubbegrenzer 7 besteht aus einem Einstellglied, einem Zwischenteil 8 und einem Sicherungselement, hier das Sperrglied 9.

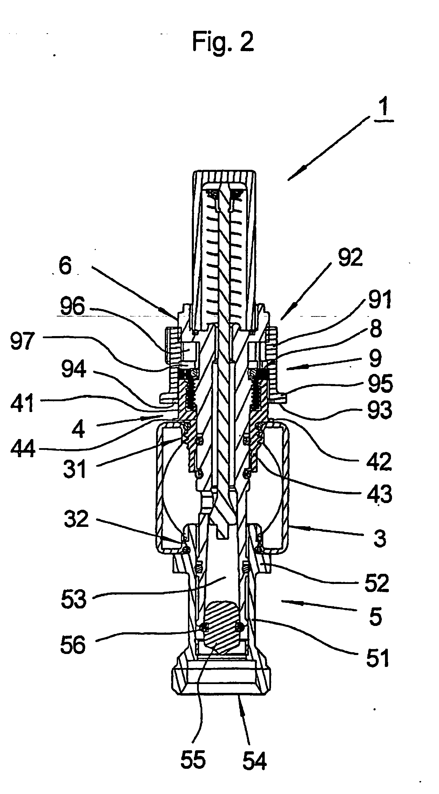

Das Zwischenteil 8 steht wirkungsmäßig mit dem Sperrglied 9, dem Ventilkörper 6 und dem den Ventilkörper 6 führenden Befestigungselement 4 in Verbindung. Betreffend weiteren technischen Details an dem neuen Verteilerventil wird im Folgenden auf die Figuren 2 bis 6b Bezug genommen.

Das Zwischenteil 8 ist konzentrisch um die Längsachse des Verteilerventiles 1; hier in spezieller Ausführung, in einer im außenliegenden Abschnitt 41 des Befestigungselementes 4 vorgesehenen Innengewindebohrung angeordnet. Hierzu ist der Zylinderkörper 81 des Zwischenteils 8 mit einem Außengewinde 86 ausgestattet. Zudem ist am Zylinderkörper 81 ein durchgehendes Innengewinde 85 vorgesehen. Dieses Innengewinde 85 greift an einem im oberen Bereich 61 des Ventilkörpers 6 vorgesehenen Außengewinde 69 ein. Ein an der oberen Seite 82 des Zwischenteiles vorgesehener Bund 83 ist mit dem Sperrglied 9 wenigstens formschlüssig verbunden, wobei das Sperrglied 9 bezüglich dem Zwischenteil 8 axial verschiebbar ist, ohne den Formschluss zu verlieren.

Das Sperrglied 9 ist mit seinem zylindrischen Körper 91 konzentrisch um den außenliegenden Abschnitt 41 des Befestigungselementes axial verschieblich angeordnet. Von der unteren Stirnfläche 93 aus ist im Sperrglied 9 eine Ausnehmung 94 vorgesehen. Damit der zylindrische Körper 91 an sich schlank und dünnwandig gehalten werden kann, ist der der unteren Stirnfläche 93 nahe Bereich als Flansch 95 ausgebildet. Dieser Flansch 95 übergreift den Sechskant-Bund 42 des Befestigungselementes 4 und die Ausnehmung 94 greift formschlüssig über diesem Sechskant-Bund 42 über, sodass in dieser Stellung das Sperrglied 9 und somit auch das mit dem Sperrglied drehsicher verbundene Zwischenteil 8 lösbar arretiert sind.

Das leitungsrohr 3 besitzt - im Querschnitt gesehen - eine obere Öffnung 31 und eine untere Öffnung 32, die beide bezüglich einer gedanklich gelegten gemeinsamen, den Querschnitt durchlaufenden Achse fluchtend angeordnet sind.

Das Befestigungselement 4 besitzt einen bezüglich des Leitungsrohres 3 außenliegenden Abschnitt 41 mit einer Innengewindebohrung und einem axial körpereinwärts gerichteten, radial liegenden Sechskant-Bund 42. Von der einen Stirnseite ausgehend und bis zur anderen Stirnseite hin verlaufend ist im Befestigungselement 4 eine Durchgangsbohrung 44 vorgesehen, die eine Führung für den weiter unten genannten Ventilkörper 6 ist. Zudem ist am Befestigungselement 4 noch ein innenliegender Abschnitt 43 vorgesehen, der mit einem Außengewinde ausgestattet ist. Mit diesem Außengewinde wird das Befestigungselement 4 in der oberen Öffnung 31 des Leitungsrohres 3 festgelegt. Das Befestigungselement 4 ist mit diesem innenliegenden Abschnitt 43 so weit eingedreht, bis der Sechskant-Bund 42 an der Außenwand des Leitungsrohres 3 fest und flüssigkeitsdicht anliegt.

In die untere Öffnung 32 des Leitungsrohres 3 ist das zur unteren Gruppe 1 b des Verteilerventiles gehörende Anschlussrohr 5 festgelegt. Dieses Anschlussrohr 5 besitzt einen Zylinderkörper 51, dessen vom Bund 52 abgesetzter Gewindezapfen in die untere Öffnung 32 eingedreht ist, bis der Bund fest und flüssigkeitsdicht an der Außenfläche des Leitungsrohres 3 anliegt. Das Anschlussrohr 5 besitzt zudem eine Durchgangsbohrung 53 mit einer - in den Figuren nach unten zeigenden - Austrittsöffnung 54. Im nahen Bereich zur Austrittsöffnung 54 ist in der Durchgangsbohrung 53 der Ventilsitz 55 des Verteilerventiles 1 angeordnet. Auf den Ventilsitz 55, das heißt auf seiner äußeren Mantelfläche und teils in einer dort vorgesehenen Ringnut liegend ist eine Dichtung 56, vorzugsweise ein O-Ring, vorgesehen.

Die Durchflussmesseinrichtung 2 besteht aus einem Gehäuse 21 (teils transparent), einem Stößel 22 mit Anströmglied, einem Kraftspeicher 23 (Feder) und einem Anzeige-Teil 24.

Der Ventilkörper 6 dieses Verteilerventiles 1 wird zur veranschaulichenden Darstellung schematisch in einem oberen Bereich 61, in einen mittleren Bereich 62 und einen unteren Bereich 63 untergliedert. An bzw. in der oberen Stirnseite 64 ist das Gehäuse 21 der Durchflussmesseinrichtung 2 angeordnet. Hierzu ist in der oberen Stirnseite 64 eine Grundbohrung vorgesehen. Der Ventilkörper 6 besitzt zudem eine Durchgangsbohrung 65, in der der Stößel 22 der Durchflussmesseinrichtung so gelagert ist, dass das einstückig mit dem Stößel 22 verbundene Anströmglied - in seiner Grundstellung - im mittleren Bereich 62 liegt. Die Durchgangsbohrung 65 ist in Richtung der unteren Stirnseite 68 des Ventilkörpers 6 abschnittsweise im Durchmesser erweitert und hat unten, an der unteren Stirnseite 68, betragsmäßig den größten Innendurchmesser. Im mittleren Bereich 62 ist zudem wenigstens ein Durchgangsloch 67 vorgesehen, durch welches hindurch das in dem Leitungsrohr zugeführte Fluid zum Ventilsitz strömt und bei geöffneter Stellung in die Abzweigung 11 gelangt.

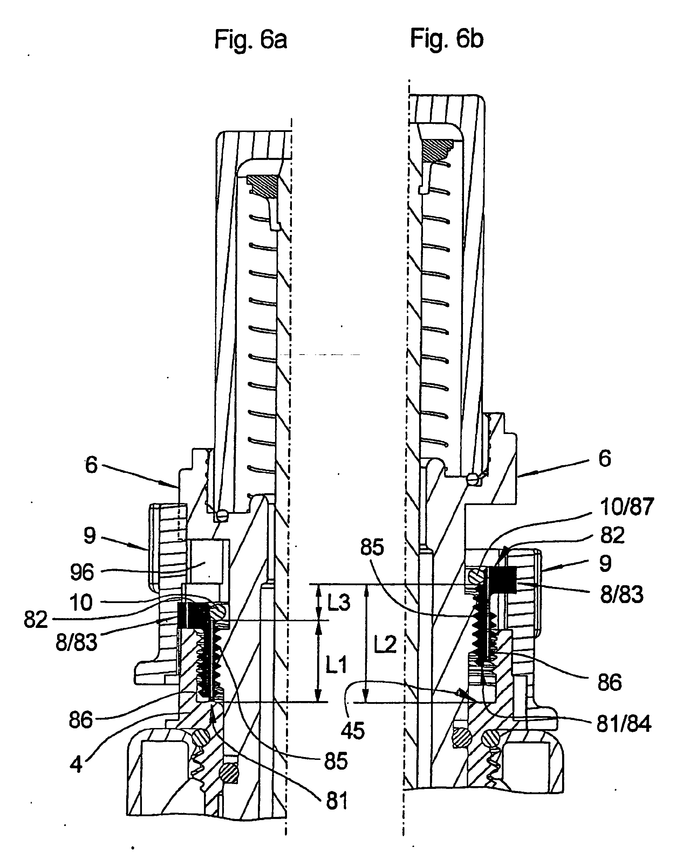

In den Figuren 6a und 6b ist die Lage des hier als Zwischenteil 8 ausgebildeten Einstellgliedes des Hubbegrenzers in seiner Grundstellung gezeigt. Das Sperrglied 9 ist in der Figur 6a axial nach oben geschoben und nunmehr formschlüssig mit dem Zwischenteil 8 und dem oberen Bereich 61 des Ventilkörpers 6 formschlüssig verbunden. Das Zwischen 8 liegt mit seiner unteren Stirnfläche noch an der Bezugsfläche 45 des Befestigungselementes 4 an. Die Position des Anschlagteiles 10 bezüglich der Bezugsfläche 45 ist hier mit dem Abstand L1 gekennzeichnet. Durch Drehbewegung des Sperrgliedes 9, bei dem synchron der Ventilkörper 6 ebenfalls axial bewegt wird, wandert das im Zwischenteil 8 gehaltene Anschlagteil 10 bis in eine Position, deren Abstand zur Bezugsfläche 45 mit dem Abstand L2 gekennzeichnet ist, hierzu Figur 6b. Die Differenz zwischen dem Abstand L1 und dem Abstand L2 ist in diesen beiden einander gegenübergestellten Figuren mit dem Abstand L3 bezeichnet. Diese Positionsänderung, der Abstand L3, entspricht einer bestimmten Durchflussmenge. Nach Herunterschieben des Sperrgliedes 9 ist das Einstellglied, hier das Zwischenteil 8, in seiner Position festgelegt und arretiert, da das Sperrglied 9, wie bereits vorn beschrieben, am Befestigungselement 4 verdrehsicher gehalten ist. Zum Schließen des Verteilerventiles 1 wird der Ventilkörper 6 so weit hinein gedreht, bis die untere Stirnseite 68 bzw. an dieser vorgesehene Innenkonen an dem Ventilsitz 55 anliegt. Zum Öffnen des Verteilerventiles 1 wird der Ventilkörper 6 in entgegengesetzter axialer Richtung durch Drehbewegung herausbewegt, bis das Außengewinde 69 an dem Anschlagteil 10 anschlägt, also die voreingestellte Position, die einer gewissen Durchflussmenge entspricht, eingestellt ist. Das Schließen und Öffnen kann mehrfach wiederholt werden und jedes Mal beim Öffnen ist eine reproduzierbare Öffnungsstellung herstellbar.

Zwischen dem Endbereich des Außengewindes 69 und dem Anschlagteil 10 kann, bei Bedarf, noch ein Dämpfungsglied angeordnet sein, damit der äußere Gewindegang des Außengewindes 69 nicht beschädigt wird.

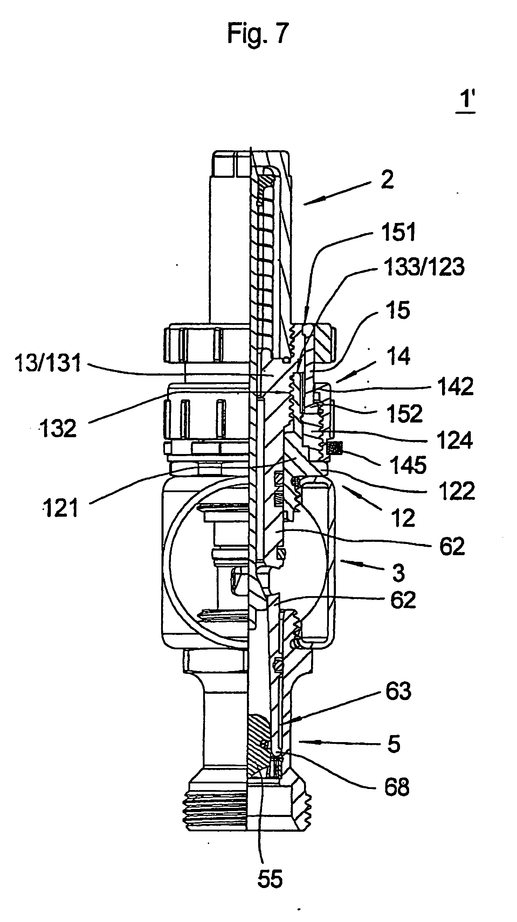

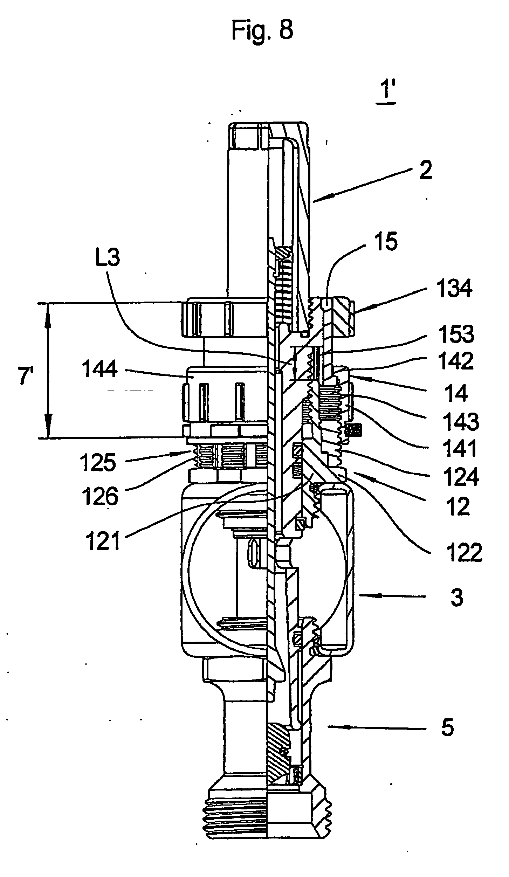

Eine zweite Ausführungsvariante des neuen Verteilerventiles mit integrierter Durchflussmesseinrichtung ist in den Figuren 7 und 8 gezeigt. Hier wird ein Hubbegrenzer 7' eingesetzt, bei dem das Einstellglied zweiteilig ist und aus einer Sperrkappe 14 und einer Anschlaghülse 15 besteht. Zudem ist hier das Sicherungselement durch einen Sicherungsring 145 gebildet, welcher auf dem Außenmantel 144 der Sperrkappe 14 angeordnet ist. In diesen Figuren sind gleiche Bauteile bzw. Bauteile mit gleichen Körperabschnitten wie in dem vorangehend beschriebenen ersten Ausführungsbeispiel mit gleichen Bezugsziffern bezeichnet. Das hier mit dem Bezugszeichen 12 versehene Befestigungselement ist an seinem außenliegenden Abschnitt 121 ebenfalls mit einer Innengewindebohrung versehen, die hier ebenfalls als Grundbohrung ausgeführt ist. Zum außenliegenden Abschnitt 121 gehört auch noch ein Bund 122, mit dem das Befestigungselement 12 an der Außenfläche des Leitungsrohres 3 fest und flüssigkeitsdicht anliegt. Oberhalb dieses Bundes 122 ist, vorzugsweise etwa über die halbe Körperlänge, auf den Außendurchmesser dieses außenliegenden Abschnittes 121 ein Gewindering 124 aufgesteckt und arretiert, der 124 ein Außengewinde 125 aufweist. In diesem Außengewinde 125 sind mehrere Längsnuten 126 eingearbeitet.

Der Ventilkörper ist in diesem Ausführungsbeispiel mit 13 bezeichnet. Sein unterer Abschnitt 63 und sein mittlerer Abschnitt 62 sind baugleich mit dem Ventilkörper 6 der oben beschriebenen ersten Ausführungsvariante. Der obere Bereich dieses Ventilkörpers 13 trägt hier das Bezugszeichen 131. In diesem oberen Bereich 131 ist ein Außengewindeabschnitt 132 vorgesehen, welcher axial körperauswärts gerichtet durch einen Anschlagbund 133 begrenzt ist. Auf den äußersten äußeren Endabschnitt des Ventilkörpers 13 ist eine Anschlaghülse 15, axial körpereinwärts gerichtet, aufgesteckt, die weiter hinten noch in Detail und Funktion beschrieben ist.

Die Sperrkappe 14 besteht aus einem Hülsenteil 141, das einenends einen Innenbund 142 aufweist und innen bis zur anderen Stirnfläche hin ein Innengewinde 143. Der Außenmantel 144 ist mit mehreren Griffteilen verstehen. Zudem ist in diesem Außenmantel 144 im Bereich des - in der Zeichnung - unteren Endes eine Ringnut vorgesehen, in der der Sicherungsring 145 drehbeweglich gelagert ist. Zudem durchgreifen, in der Zeichnung nicht dargestellte, Durchgangslöcher den Außenmantel, durch die Teilbereiche des Sicherungsringes 145 bei entsprechender Stellung von selbigen 145 hindurch und in wenigstens eine Längsnut 126 eingreifen und somit die Sperrkappe 14 gegen axiale Verschiebung arretieren, indem eine Verdrehsicherung geschaffen wurde.

Die in diesem zweiten Ausführungsbeispiel zusammen mit der Sperrkappe 14 das Einstellglied bildende Anschlaghülse 15 ist einenends mit einem Innenflansch 151 und anderenends mit einem Außenflansch 152 ausgestattet. Die von der einen, in der Zeichnung der unteren Stirnseite nach innen zum Innenflansch 151 reichende innere Mantelfläche ist mit Längsrillen 153 ausgestattet. Diese Anschlagshülse 15 wird über den endseitigen Außendurchmesser des Ventilkörpers 13 geschoben. Formschluss entsteht durch die Rändelung dieses Außendurchmessers des Ventilkörpers 13 und den innenliegenden Längsrillen 153 der Anschlaghülse 15. Die axial körperauswärts gerichtete Stirnfläche der Anschlaghülse 15 schließt mit der Stirnfläche des Ventilkörpers 13 im Wesentlichen bündig ab. Der Endbereich des Außendurchmessers des Ventilkörpers 13 ist zudem so gestaltet, dass der Innenflansch 151 an einen korrespondierend ausgebildeten Absatz im Außendurchmesser des Ventilkörpers 13 anliegt.

Die vorstehend identifizierten Zeichnungsmerkmale zeigten zwar mehrere bevorzugte Ausführungsformen, jedoch werden auch andere erfindungsgemäßen Ausführungsformen wie in der Diskussion erwähnt, erwogen. Diese Offenbarung bietet veranschaulichende erfindungsgemäße Ausführungsformen als Beispiele und nicht als Einschränkungen. Der Fachmann kann zahlreiche andere Modifikationen und Ausführungsformen ersinnen, welche in den Rahmen und den Geist der erfindungsgemäßen Prinzipien fallen.

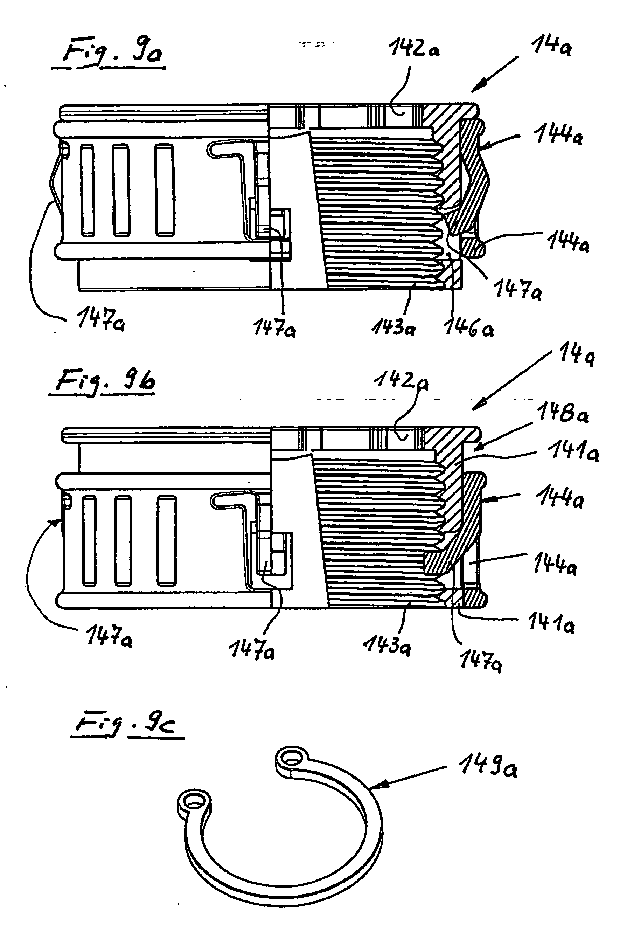

Eine solche, mögliche Modifikation der Erfindung ist den Figuren 9a, 9b und 9c gezeigt. Zur weiteren Verbesserung der Handhabung des Einstellgliedes für die Hubbegrenzung ist bei der genannten zweiten Ausführungsvariante erfindungsgemäß vorgesehen, dass das Sicherungselement zur Arretierung der gewählten axialen Position der Sperrkappe 14a integral mit der Sperrkappe 14a ist. In diesen Figuren 9a und 9c ist nur die weitere Variante einer Sperrkappe mit Sicherungselement gezeigt. Auf die Gesamtdarstellung des neuen, erfindungsgemäßen Ventiles wird hier der Übersichtlichkeit halber verzichtet. Das Ventil an sich ist bereits in den Figuren 7 und 8 dargestellt und in den zugehörigen Beschreibungsteilen erläutert. Der oben genannte Sicherungsring 145 wird hier ersetzt durch Rastteile 147a, die am Außenmantel 144a der Sperrkappe 14a vorgesehen sind. Dabei ist der Außenmantel 144a der Sperrkappe 14a selbst als ein axial verschiebbares Ringteil 144a ausgebildet. Dieses Ringteil 144a ist konzentrisch um das Hülsenteil 141a der Sperrkappe 14a angeordnet. Dabei ist das Ringteil 144a in seiner axialen Länge kürzer als das Hülsenteil 141a. Bevorzugt sind im axial verschiebbaren Ringteil 144a vier federelastische Rastteile 147a vorgesehen, vorzugsweise in einer 90°-Teilung angeordnet. Im Hülsenteil 141a sind eine gleiche Anzahl von Aussparungen 146a vorgesehen. Jeweils ein Rastteil 147a ragt durch eine Aussparung 146a in den Innenraum des Hülsenteils 141a hinein. Durch axiale Verschiebung des am Hülsenteil 141a geführten Ringteiles 144a sind zwei Funktionspositionen einstellbar. In der einen Position ragt jedes Rastteil 147a, wie voranstehend genannt, in den Innenraum des Hülsenteiles 141a hinein - die Arretierposition - , in der anderen Position - Bewegungsposition - ist jedes Rastteil 147a durch Anlage an einem Wandabschnitt der Aussparung 146a radial nach außen gedrückt. In der Arretierposition greift jedes Rastteil 147a in eine der bereits weiter vorn genannten Längsnuten 126 (hier nicht dargestellt) des Befestigungselementes 12 (hier nicht dargestellt) ein. Zur Sicherung dieser Position wird ein Blockierteil 149a in den zwischen einer Stirnseite des Ringteiles 144a und des Hülsenteiles 141a gebildeten radialen Spaltes 148a angeordnet.

Zur Änderung der eingestellten Position der Hubbegrenzung, also zur Einnahme der Bewegungsposition, wird das Blockierteil 149a entfernt, das Ringteil 144a in axialer Richtung verschoben, sodass die Rastteile 147a aus den Längsnuten des Befestigungselementes herausgeführt werden. Sodann wird die Sperrkappe 14a in axialer Richtung durch Drehung in eine neue Soll-Position gebracht. Dann das Ringteil 144a in entgegengesetzter Richtung axial bewegt, wodurch die federelastischen Rastteile 147a sich wieder nach innen bewegen und letztendlich jeweils in eine Längsnut des Befestigungselementes eingreifen. Eine Drehung der Sperrkappe 14a mit ihrem Innengewinde143a an dem Außengewinde 125 des Gewinderinges 124 (hier nicht gezeigt, s. Figur 7 und 8) des Befestigungselementes ist nunmehr nicht möglich. Das Blockierteil 149a wird wieder in dem radialen Spalt 148a angeordnet, wodurch eine unbeabsichtigte Öffnung des Sperrmechanismus nicht erfolgen kann.

Das neue Verteilerventil kann an Verteilerventilen mit integrierter Durchflussmesseinrichtung in unterschiedlichster Ausführung verwendet werden, unabhängig davon, wie der Ventilsitzes und/oder Ventilkörper geformt sind und abhängig von deren Lage.

### Bezugszeichenliste

- 1, 1': Verteilerventil
- 1a: obere Gruppe von Pos. 1
- 1b: untere Gruppe von Pos. 1
- 2: Durchflussmesseinrichtung
- 21: Gehäuse (teils transparent)
- 22: Stößel mit Anströmglied
- 23: Kraftspeicher (Feder)
- 24: Anzeigeteil 3 Leitungsrohr
- 31: obere Öffnung im Leitungsrohr
- 32: untere Öffnung im Leitungsrohr
- 4: Befestigungselement
- 41: außen liegender Abschnitt mit Innengewindebohrung
- 42: Sechskant-Bund
- 43: innen liegender Abschnitt mit Außengewinde
- 44: Durchgangsbohrung (Führung für Pos. 6)
- 45: Bezugsfläche
- 5: Anschlussrohr
- 51: Zylinderkörper
- 52: Bund mit abgesetztem Gewindezapfen
- 53: Durchgangsbohrung
- 54: Austrittsöffnung
- 55: Ventilsitz
- 56: Dichtung (O-Ring auf Mantelfläche Pos. 55, in Ring-Nut)
- 6: Ventilkörper (rohrförmiges Element)
- 61: oberer Bereich von Pos. 6
- 62: mittlerer Bereich von Pos. 6
- 63: untere Bereich von Pos. 6
- 64: obere Stirnseite
- 65: Durchgangsbohrung
- 66: äußere Mantelfläche
- 67: Durchgangsloch
- 68: untere Stirnseite
- 69: Außengewinde
- 7, 7': Hubbegrenzer
- 8: Zwischenteil
- 81: Zylinderkörper
- 82: obere Seite
- 83: Bund
- 84: untere Seite
- 85: Innengewinde
- 86: Außengewinde
- 87: Eindrehung für Pos. 10
- 9: Sperrglied
- 91: zylindrischer Körper
- 92: obere Stirnfläche
- 93: untere Stirnfläche
- 94: Ausnehmung (6-kant förmig)
- 95: Flansch
- 96: Durchgangsbohrung mit Längsrillen
- 97: mittlere Bohrung
- 98: vordere Bohrung
- 10: Anschlagteil (z. B. Sprengring) in Pos. 8
- 11: Abzweigung (Rohr)
- 12: Befestigungselement
- 121: außenliegender Abschnitt mit Innengewindebohrung
- 122: Bund
- 123: Stirnfläche
- 124: Gewindering
- 125: Außengewinde
- 126: Längsnuten in Pos. 124
- 13: Ventilkörper
- 131: oberer Bereich von Pos. 13
- 132: Außengewindeabschnitt
- 133: Anschlagbund
- 134: Handrad
- 14: Sperrkappe
- 141: Hülsenteil
- 142: Innenbund
- 143: Innengewinde
- 144: Außenmantel mit Griffteilen
- 145: Sicherungsring
- 14a: Sperrkappe (zweite Variante)
- 141a: Hülsenteil
- 142a: Innenbund
- 143a: Innengewinde
- 144a: Außenmantel mit Griffteilen (axial verschiebbares Ringteil)
- 146a: Aussparungen in Pos. 141a
- 147a: Rastteile
- 148a: radialer Spalt
- 149a: Blockierteil
- 15: Anschlaghülse
- 151: Innenflansch
- 152: Außenflansch
- 153: Längsrillen
- L1: Abstand von Pos. 10 bzgl. einer Bezugsfläche
- L2: Abstand von Pos. 10 in einer zweiten Position bzgl. der gleichen Bezugsfläche
- L3: Differenz zwischen dem Abstand L1 und dem Abstand L2

## Patentansprüche

1. Verteilerventil (1) mit integrierter Durchflussmesseinrichtung (2), insbesondere für Warmwasser-Heizungsanlagen, zum Einsatz an einem Leitungsrohr (3), wobei im Verteilerventil ein verschließbarer Ventilsitz (55) und hierzu ein axial bewegbarer Ventilkörper (6) vorgesehen sind, wobei ein Abschnitt des Ventilkörpers (6) in einem Befestigungselement (4) gehalten und geführt ist, welches (4) von außen an einer Öffnung (31) in dem Leitungsrohr (3) angeordnet ist und besagter Abschnitt des Ventilkörpers ein Griffelement besitzt,
**dadurch gekennzeichnet, dass**
dem Ventilkörper (6) und/oder dem führenden Befestigungselement (4) ein die mit dem Öffnen des Verteilerventiles (1) einhergehende axiale Verschiebung des Ventilkörpers (6) begrenzender Hubbegrenzer (7; 7') zugeordnet ist, wobei der Hubbegrenzer (7; 7') von einem axial bewegbaren Einstellglied (8; 14, 15) und einem Sicherungselement (9; 145) gebildet ist.

2. Verteilerventil (1) nach Anspruch 1,
**dadurch gekennzeichnet, dass**
das Einstellglied ein Zwischenteil (8) ist, wobei das Zwischenteil (8) konzentrisch zur Bewegungsachse des Ventiles (1) zwischen einem Abschnitt des Befestigungselementes (4) und einem Abschnitt des Ventilkörpers (6) angeordnet ist.

3. Verteilerventil (1) nach Anspruch 2,
**dadurch gekennzeichnet, dass**
das Zwischenteil (8) ein Zylinderkörper (81) ist, dessen obere Seite (82) einen Bund (83) aufweist und von dessen unterer Seite (84) aus körpereinwärts ein durchgehendes Innengewinde (85) und ein körpereinwärts gerichtetes Außengewinde (86) vorgesehen sind, wobei von der oberen Seite (82) aus in Richtung in Richtung Innengewinde (85) eine Eindrehung (87) angeordnet ist, in der ein Anschlagteil (10) angeordnet ist.

4. Verteilerventil nach Anspruch 1,
**dadurch gekennzeichnet, dass**
das Sicherungselement ein Sperrglied (9) ist, wobei das Sperrglied (9) mit seinem zylindrischen Körper (91) konzentrisch um den außenliegenden Abschnitt (41) des Befestigungselementes (4) axial verschieblich angeordnet ist und das Sperrglied (9) formschlüssig mit dem Zwischenteil (8) jeder seiner möglichen Axialpositionen verbunden ist.

5. Verteilerventil nach Anspruch 4,
**dadurch gekennzeichnet, dass**
der zylindrische Körper (91) des Sperrgliedes (9) von seiner oberen Stirnfläche (92) aus in Richtung seiner unteren Stirnfläche (93) eine Durchgangsbohrung (96) mit Längsrillen, eine mittlere Bohrung (97) und eine vordere Bohrung (98) aufweist, wobei der der unteren Stirnfläche (93) nahe Körperbereich als Flansch (95) ausgebildet ist und von der unteren Stirnfläche (93) aus eine sechskant-förmige Ausnehmung (94) vorgesehen ist.

6. Verteilerventil nach Anspruch 1,
**dadurch gekennzeichnet, dass**
das Einstellglied von einer Sperrkappe (14) und einer Anschlaghülse (15) gebildet ist.

7. Verteilerventil nach Anspruch 6,
**dadurch gekennzeichnet, dass**
die Anschlaghülse (15) mit ihrem Innenflansch (151) oben an dem Verschlussteil angreift und mit dem an seinem anderen Ende vorgesehenen Außenflansch (152) mit einem Innenbund (142) der Sperrkappe (14) zusammenwirkt.

8. Verteilerventil nach Anspruch 6,
**dadurch gekennzeichnet, dass**
die Sperrkappe (14) ein Innengewinde (143) aufweist, mit welchem sie (14) zwecks Axialverschiebung drehbar an einem Außengewinde (125) des Befestigungselementes (12) drehbar angeordnet ist.

9. Verteilerventil nach Anspruch 6,
**dadurch gekennzeichnet, dass**
das Sicherungselement ein Sicherungsring (145) ist, welcher im Außenmantel (144) der Sperrkappe (14) lös- und arretierbar angeordnet ist.

10. Verteilerventil nach Anspruch 6,
**dadurch gekennzeichnet, dass**
das Sicherungselement integral mit der Sperrkappe (14) ist.

11. Verteilerventil nach Anspruch 10,
**dadurch gekennzeichnet, dass**
die Sperrkappe (14a) zweiteilig ist, aus einem inneren Hülsenteil (141a) und einem konzentrisch und verschiebbar an letzterem (141a) angeordneten Ringteil (144a) besteht, wobei das Sicherungselement wenigstens ein federelastisches Rastteil (147a) ist, welches zum Ringteil (144a) gehört und das innere Hülsenteil (141a) in einer Aussparung (146a) nach innen durchgreift.

## Claims

1. Distributor valve (1) with integrated throughflow measuring device (2), particularly for hot water heating installations, for use at a duct pipe (3), wherein a closable valve seat (55) and a valve body (6) movable axially relative thereto are provided in the distributor valve, wherein a section of the valve body (6) is held and guided in a fastening element (4), which fastening element (4) is arranged from outside at an opening (31) in the duct pipe (3) and the said section of the valve body has a grip element, **characterised in that** a stroke limiter (7, 7') limiting the axial displacement of the valve body (6) accompanying the opening of the distributor valve (1) is associated with the valve body (6) and/or the guiding fastening element (4), wherein the stroke limiter (7; 7') is formed by an axially movable setting element (8; 14, 15) and a securing element (9; 145).

2. Distributor valve (1) according to claim 1, **characterised in that** the setting element is an intermediate part (8), wherein the intermediate part (8) is arranged concentrically with respect to the movement axis of the valve (1) between a section of the fastening element (4) and a section of the valve body (6).

3. Distributor valve (1) according to claim 2, **characterised in that** the intermediate part (8) is a cylindrical body (81), the upper end (82) of which has a collar (83) and from the lower side (84) thereof a continuous internal thread (85) going inwardly of the body and an external thread (86) directed inwardly of the body are provided, wherein a turning (87) is arranged to run from the upper end (82) in the direction of the internal thread (85), an abutment part (10) being arranged in the turning.

4. Distributor valve according to claim 1, **characterised in that** the securing element is a blocking element (9), wherein the blocking element (9) is arranged with its cylindrical body (91) concentrically around the outwardly disposed section (41) of the fastening element (4) to be axially displaceable and the blocking element (9) is mechanically positively connected with the intermediate part (8) of each of its possible axial positions.

5. Distributor valve according to claim 4, **characterised in that** the cylindrical body (91) of the blocking element (9) has, from its upper end face (92) in the direction of its lower end face (93), a passage bore (96) with longitudinal grooves, a middle bore (97) and a front bore (98), wherein the body region near the lower end face (93) is formed as a flange (95) and a hexagonal recess (94) going from the lower end face (93) is provided.

6. Distributor valve according to claim 1, **characterised in that** the setting element is formed by a blocking cap (14) and an abutment sleeve (15).

7. Distributor valve according to claim 6, **characterised in that** the abutment sleeve (15) engages by its inner flange (151) at the top aT the closure part and co-operates by the outer flange (152), which is provided at its other end, with an inner collar (142) of the blocking cap (14).

8. Distributor valve according to claim 6, **characterised in that** the blocking cap (14) has an internal thread (143) by which it (14) is rotatably arranged at an external thread (125) of the fastening element (12) for the purpose of axial displacement.

9. Distributor valve according to claim 6, **characterised in that** the securing element is a securing ring (145) which is releasably and lockably arranged in the outer circumference (144) of the blocking cap (14).

10. Distributor valve according to claim 6, **characterised in that** the securing element is integral with the blocking cap (14).

11. Distributor valve according to claim 10, **characterised in that** the blocking cap (14a) is of two-part construction, consisting of an inner sleeve part (141a) and an annular part (144a) arranged concentrically and displaceably at the latter (141a), wherein the securing element is at least one resilient detent part (147a) which belongs to the annular part (144a) and which engages inwardly through the inner sleeve part (141 a) in a recess (146a).

## Revendications

1. Soupape de distribution (1) à dispositif intégré (2) mesureur de débits, notamment dévolue à des installations de chauffage à eau chaude et conçue pour être intégrée dans une canalisation tubulaire (3), ladite soupape de distribution renfermant un siège d'obturation (55) pouvant être fermé, et un corps obturateur (6) mobile axialement vis-à-vis dudit siège, une région dudit corps obturateur (6) étant retenue et guidée dans un élément de fixation (4), lequel (4) est implanté de l'extérieur dans la canalisation tubulaire (3), au niveau d'un orifice (31), et ladite région dudit corps obturateur étant pourvue d'un élément offrant prise,
**caractérisée par le fait**
**qu'**un limiteur de courses (7 ; 7'), limitant le coulissement axial du corps obturateur (6) accompagnant l'ouverture de ladite soupape de distribution (1), est affecté audit corps obturateur (6) et/ou à l'élément de fixation (4) à effet de guidage, ledit limiteur de courses (7 ; 7') étant constitué d'un organe de réglage (8 ; 14, 15) mobile axialement, et d'un élément d'arrêt (9 ; 145).

2. Soupape de distribution (1) selon la revendication 1,
**caractérisée par le fait que**
l'organe de réglage est une pièce intermédiaire (8), ladite pièce intermédiaire (8) étant interposée, concentriquement à l'axe de mouvement de ladite soupape (1), entre une région de l'élément de fixation (4) et une région du corps obturateur (6).

3. Soupape de distribution (1) selon la revendication 2,
**caractérisée par le fait que**
la pièce intermédiaire (8) est un corps cylindrique (81) dont la face supérieure (82) présente un collet (83), et à partir de la face inférieure (84) duquel sont prévus, vers l'intérieur du corps, un filetage intérieur ininterrompu (85) et un filetage extérieur (86) orienté vers l'espace interne dudit corps, une creusure (87), dans laquelle une pièce de butée (10) est logée, étant façonnée par tournage à partir de ladite face supérieure (82) en direction dudit filetage intérieur (85).

4. Soupape de distribution (1) selon la revendication 1,
**caractérisée par le fait que**
l'élément d'arrêt est un organe de blocage (9), ledit organe de blocage (9) étant agencé à coulissement axial, par son corps cylindrique (91), concentriquement autour de la région (41) de l'élément de fixation (4) qui est située à l'extérieur, et ledit organe de blocage (9) étant relié à la pièce intermédiaire (8), par complémentarité de formes, dans chacune de ses positions axiales possibles.

5. Soupape de distribution (1) selon la revendication 4,
**caractérisée par le fait que**
le corps cylindrique (91) de l'organe de blocage (9) comprend à partir de sa face extrême supérieure (92), en direction de sa face extrême inférieure (93), un alésage traversant (96) pourvu de striures longitudinales, un alésage central (97) et un alésage antérieur (98), la région dudit corps, située à proximité de ladite face extrême inférieure (93), étant réalisée sous la forme d'une collerette (95), et un évidement (94) de configuration hexagonale étant prévu à partir de ladite face extrême inférieure (93).

6. Soupape de distribution (1) selon la revendication 1,
**caractérisée par le fait que**
l'organe de réglage est formé d'un clapet d'isolement (14) et d'une douille de butée (15).

7. Soupape de distribution (1) selon la revendication 6,
**caractérisée par le fait que**
la douille de butée (15) vient en prise en partie haute avec la pièce obturatrice, par sa collerette intérieure (151), et coopère, par la collerette extérieure (152) prévue à son autre extrémité, avec un collet intérieur (142) du clapet d'isolement (14).

8. Soupape de distribution (1) selon la revendication 6,
**caractérisée par le fait que**
le clapet d'isolement (14) comporte un filetage intérieur (143) par lequel il (14) est agencé à rotation, en vue d'un coulissement axial, sur un filetage extérieur (125) de l'élément de fixation (12).

9. Soupape de distribution (1) selon la revendication 6,
**caractérisée par le fait que**
l'élément d'arrêt est une bague d'arrêt (145) logée, avec faculté de libération et de verrouillage, dans l'enveloppe extérieure (144) du clapet d'isolement (14).

10. Soupape de distribution (1) selon la revendication 6,
**caractérisée par le fait que**
l'élément d'arrêt forme un seul tenant avec le clapet d'isolement (14).

11. Soupape de distribution (1) selon la revendication 10,
**caractérisée par le fait que**
le clapet d'isolement (14a) est composé de deux pièces, une pièce intérieure (141a) formant douille et une pièce (144a) formant bague, agencée concentriquement sur cette dernière (141a) avec faculté de coulissement, l'élément d'arrêt se présentant au moins comme une pièce élastique encliquetable (147a) qui fait partie de ladite pièce (144a) formant bague et traverse ladite pièce intérieure (141a) formant douille, vers l'intérieur, dans un évidement (146a).
